# EUROPÄISCHE PATENTANMELDUNG

(11) **EP 1 900 511 A1**
(43) Veröffentlichungstag der Anmeldung: **19.03.2008**
(21) Anmeldenummer: 07018123.5
(22) Anmeldetag: 14.09.2007
(51) Int. Cl.: B32B 15/04, E04C 2/04

(54) **Verfahren zum Herstellen einer Schicht mit einer Deckschicht und einem Träger und Schicht mit Deckschicht und Träger**

(30) Priorität: 15.09.2006 DE 102006043359
(71) Anmelder: Ficotec Veredelungs GmbH, 93055 Regensburg (DE)
(72) Erfinder: Schlüter, Moritz, 93055 Regensburg (DE); Schlüter, Alex, 93055 Regensburg (DE)
(74) Vertreter: Patentanwaltskanzlei WILHELM & BECK

(57) **Zusammenfassung**

Die Erfindung betrifft ein Verfahren zum Herstellen einer Schicht mit einer Deckschicht und einem Träger, wobei der Träger eine klebenden Paste aufweist, die mit der Deckschicht verklebt ist.

## Beschreibung

Die Erfindung betrifft ein Verfahren zum Herstellen einer Schicht mit einer Deckschicht und einem Träger gemäß Patentanspruch 1 und eine Schicht mit einer Deckschicht und einem Träger gemäß Patentanspruch 9.

Das erfindungsgemäße Verfahren gemäß Patentanspruch 1 und die erfindungsgemäße Schicht gemäß Patentanspruch 9 eignen sich insbesondere zur Herstellung bzw. zur Bereitstellung einer dampf- und/oder gasdichten Bahn mit verbesserten Brandschutzeigenschaften.

Mehrlagige Folien, beispielsweise zur Verwendung im Baubereich, sind im Stand der Technik bereits bekannt. Beispielsweise ist es aus DE 102 56 434 A1 bekannt, eine mehrlagige Folie für den Baubereich herzustellen. Die mehrlagige Folie ist für Wasserdampf undurchlässig und besteht aus einer Metallfolie als Mittellage. Beidseitig zur Metallfolie sind Außenlagen aus Vlies, Gewebe, technischem Gewirke, Stricken, Glasfasern, verstärktem Papier und dergleichen aufgebracht. Die Außenlagen sind insbesondere mit thermoplastischem Kunststoff, unlöslich aufkaschiert.

Die Außenlagen sind überputzbar und/oder überklebbar. Mit der Folie ist es möglich, direkt auf der Baustelle ohne einen größeren Aufwand eine gegenüber unterschiedlichen Einwirkungen dichte, insbesondere wasserdampfdichte Sperrschicht für einen Flächenbereich wie Wände, Decken, Fußböden und dergleichen zu erhalten, wobei übliche Baustoffe wie Putze, Mörtel, Farben, Fliesenklebstoffe usw. ohne weitere Vorbehandlung auf die Sperrschicht aufgebracht werden können und darauf auf Dauer haften.

Aus DE 195 27 858 A1 ist ein Verfahren zur Herstellung einer mit beschichtetem Glasvlies kaschierten Gipsbauplatte bekannt. Bei dem bekannten Verfahren wird eine sich wagerecht weiterbewegende Bahn von beschichtetem Glasvlies auf der unbeschichteten Seite mit einem Strang von abbindefähiger Gipskernmasse versehen. Die Gipskernmasse dringt in das Glasvlies ein und bildet einen Plattenkern. Dabei ist es erwünscht, wenn eine möglichst flächendeckende Berührung der in das Glasvlies eindringenden abbindefähigen Gipskernmasse mit der in das Glasvlies eingedrungenen Beschichtungsmasse gegeben ist. Hierzu wird eine relativ flüssige Breikonsistenz eingestellt und das mit der abbindefähigen Gipskernmasse versehene beschichtete Glasvlies wird an mindestens zwei in Weiterbewegungsrichtung beabstandeten Rüttelstellen quer über die Bahnebene des Glasvlieses gerüttelt. Auf diese Weise wird eine Gipsbauplatte mit Beschichtung samt Glasvlies und einem Plattenkern hergestellt.

Die Aufgabe der Erfindung besteht darin, ein verbessertes Verfahren zum Herstellen einer Schicht mit einer Deckschicht und einem Träger bereitzustellen. Weiterhin besteht die Aufgabe der Erfindung darin, eine verbesserte Schicht mit einer Deckschicht und einem Träger bereitzustellen.

Die Aufgaben der Erfindung werden durch die unabhängigen Ansprüche 1 und 9 gelöst.

Weitere vorteilhafte Ausbildungsformen sind in den abhängigen Ansprüchen angegeben.

Ein Vorteil des erfindungsgemäßen Verfahrens besteht darin, dass auf einfache Weise eine Verbindung zwischen dem Träger und der Deckschicht, insbesondere eine Verklebung hergestellt wird. Durch das Aufbringen eines Trägers, der wenigstens teilweise aus einer Paste gebildet ist, wird eine zuverlässige Verbindung zwischen der Deckschicht und dem Träger hergestellt.

Die erfindungsgemäße Schicht mit der Deckschicht und dem Träger weist den Vorteil auf, dass eine flächige und sichere Verklebung zwischen der Deckschicht und dem Träger gegeben ist. Dies wird dadurch erreicht, dass der Träger wenigstens teilweise eine klebende Paste aufweist und mit der Deckschicht verklebt ist.

In einer Weiterbildung der Schicht weist der Träger ein Gewebe auf, das mit der klebenden Paste getränkt ist. Die Paste reicht bis an die Grenzfläche zwischen der Deckschicht und dem Gewebe. Somit wird eine sichere Verklebung des Gewebes mit der Deckschicht möglich.

In einer weiteren Ausführungsform wird der Träger mithilfe eines Gewebes ausgebildet, das mit einer klebenden Paste getränkt wird und dadurch eine zuverlässige Verbindung zwischen dem Träger und der Deckschicht ermöglicht.

In einer einfachen Ausführungsform wird der Träger zuerst auf die Deckschicht gelegt und anschließend auf der freien Fläche des Trägers die klebende Paste aufgetragen. Die klebende Paste wird in das Gewebe bis zur Grenzfläche zwischen der Deckschicht und dem Gewebe eingebracht. Somit wird eine klebende Verbindung zwischen dem Gewebe und der Deckschicht hergestellt.

In einer weiteren Ausführungsform wird die zu verklebende Seite des Gewebes mit der Paste getränkt und anschließend die mit Paste getränkte Seite des Gewebes auf die Deckschicht aufgelegt und mit der Deckschicht verklebt.

In vorteilhafter Weise ist die Deckschicht als Metallfolie, insbesondere als Aluminiumfolie ausgebildet. Die Aluminiumfolie eignet sich als dampfdichte Schicht und ist zudem gut zu verarbeiten.

In einer weiteren Ausführungsform wird als klebende Paste eine mineralische Paste verwendet.

Die mineralische Paste basiert vorzugsweise auf Wasserbasis und ist damit umweltfreundlich zu verarbeiten.

In einer weiteren Ausführungsform wird als Deckschicht eine Kunststofffolie verwendet. Die Kunststoffolie kann aus Polyurethanfolie oder Polyethylen hergestellt sein. Sowohl die Polyethylenfolie als auch die Polyurethanfolie eignen sich für die Herstellung der Schicht und den verwendeten Klebevorgang.

In einer weiteren Ausführungsform wird der Träger durch eine Paste mit Armierungspartikel hergestellt.

Versuche haben gezeigt, dass eine gute Schicht mit einem Gewebe, insbesondere mit Glasvlies erhalten wird, das ein Flächengewicht zwischen 15 und 200 g pro m² aufweist.

Die Erfindung wird im Folgenden anhand der Figuren näher erläutert. Es zeigen:
Fig. 1 einen Querschnitt durch eine erste Schicht,
Fig. 2 einen Querschnitt durch eine zweite Schicht,
Fig. 3 eine schematische Darstellung einer Vorrichtung zur Herstellung einer Schicht,
Fig. 4 eine schematische Darstellung einer zweiten Vorrichtung zur Herstellung einer Schicht,
Fig. 5 zeigt eine dritte Schicht,
Fig. 6 zeigt eine Vorrichtung zur Herstellung einer Schicht mit beidseitigem Träger,
Fig. 7 zeigt eine weitere Vorrichtung zum Aufbringen einer Paste auf eine Deckschicht,
Fig. 8 zeigt eine weitere Vorrichtung zum beidseitigen Auftragen einer Paste als Träger, und
Fig. 9 zeigt eine Anordnung gemäß Fig. 4 mit doppelseitigem Auftrag einer Paste mit Träger.

Die Erfindung betrifft im Wesentlichen ein Verfahren zur Herstellung einer Schicht mit einer Deckschicht und einem Träger und eine Schicht mit einer Deckschicht und einem Träger, wobei der Träger mit der Deckschicht verklebt ist.

Insbesondere betrifft die Erfindung einen dampfdichten Mineralvlieskomplex, wobei der Komplex eine dampfdichte Folie, z. B. eine Aluminiumfolie, eine Polyurethanfolie oder eine Polyethylenfolie aufweist. Der Träger wird in einem Arbeitsgang mit der dampfdichten Folie direkt verbunden. Anders als bei bekannten Schichten, bei denen der Träger mit der Aluminiumfolie mittels z. B. einer Polyethylenfolie thermisch zusammengefügt wird, wird bei der erfindungsgemäßen Schicht die Deckschicht, insbesondere die dampfdichte Folie mit dem Träger durch eine klebende Paste, insbesondere durch eine mineralische Paste zusammengefügt.

In einer Ausführungsform wird die Schicht aus der dampfdichten Folie und dem Träger zusammengefügt und mit einer Paste beaufschlagt, wobei die Paste mindestens teilweise den Träger durchtränkt. Der Träger besteht in dieser Ausführung aus einem Gewebe, das eine Paste aufnehmen kann. An der Grenzfläche zwischen dem Träger und der dampfdichten Folie benetzt die Paste die dampfdichte Folie. Die mineralische Paste ist so zu wählen, dass eine gute Haftung sowohl am Träger als auch an der dampfdichten Folie erreicht wird. Zur Benetzung des Trägers und der Folie kann die Paste sowohl von oben auf den Träger oder zwischen den Träger und die Folie eingebracht werden. Die Dosierung der Paste kann z. B. mittels eines Rakels schon beim Auftragen der Paste oder durch einen vorgegebenen Spalt mittels einer Walze festgelegt werden. Die Art der Paste ist dem späteren Verwendungszweck anzupassen. Soll z. B. später direkt auf die Oberfläche des Trägers Putz oder Fliesen aufgebracht werden, dann ist eine alkaliresistente mineralische Paste zu bevorzugen. Für fertige Sichtanwendungen werden geeignete Farben und/oder Bindemittel gewählt. Je nach Art der Paste ist im Folgenden ein Verfestigungsprozess, z. B. eine Aushärtung oder eine Trocknung nachzuschalten.

Als dampfdichte Folie kann eine Metallfolie, beispielsweise aus Aluminium, Kupfer, Blei oder Edelstahl verwendet werden. Die Dicke der Folie kann zwischen 5 und 500 µm variieren, wobei gute Eigenschaften mit einer Dicke von 7-20 µm, insbesondere für eine Aluminiumfolie erhalten werden. Als Träger kann ein Glasvlies mit einem Flächengewicht zwischen 15 und 200 g/m² verwendet werden, wobei gute Ergebnisse mit einem Glasvlies mit einem Flächengewicht von 50 g/m² erreicht werden.

Weiterhin kann als dampfdichte Folie eine Kunststofffolie beispielsweise aus PP, PE, PUR, PES verwendet werden.

Die Paste kann mineralische oder organische Füllstoffe aufweisen. Als mineralische Füllstoffe können CaCO3, Kaolin, ATH, Talkum usw. verwendet werden. Als organische Füllstoffe können Hohlkugeln, expandierende Stoffe usw. verwendet werden. Weiterhin können mineralische, organische oder aus Kunststoff bestehende Fasern verwendet werden. Zudem weist die Paste Bindemittel bzw. einen Klebstoff auf. Als Klebstoff können thermoplastische bevorzugt wasserbasierte Polymere verwendet werden. Zudem können als Klebstoff duroplastische oder anorganische Klebstoffe verwendet werden. Weiterhin kann die Paste Hilfsmittel wie z.B. Entschäumer usw. aufweisen.

Die Schicht aus der gasdichten Folie und dem Träger mit der ausgehärteten Paste weist den Vorteil auf, dass der Träger zugleich als Haftgrund für das Aufbringen eines Putzes oder für Fliesen dient. Die Schicht ist zudem abhängig von der gewählten Ausführungsform schwer brennbar bzw. nicht brennbar. Die Schicht wird in einem Prozess ohne einen zusätzlichen Klebeprozess hergestellt. Weiterhin ist kein starkes Zusammenpressen der Folie erforderlich. Dadurch kann eine dünnere gasdichte Folie verwendet werden.

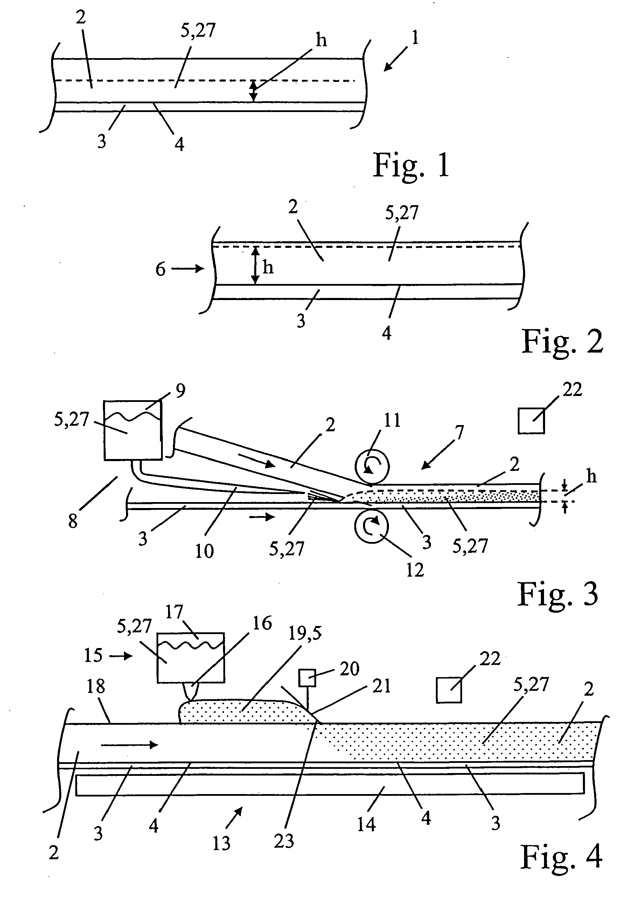

Fig. 1 zeigt in einer schematischen Darstellung einen Querschnitt durch eine erste Schicht 1, die einen Träger 2 aus einem Gewebe und eine Deckschicht 3 aufweist. Die Deckschicht 3 ist, wie oben erläutert, vorzugsweise in Form einer dampf- und/oder gasdichten Folie ausgebildet. Der Träger 2 und die Deckschicht 3 liegen an einer Grenzfläche 4 aneinander. Der Träger 2 ist mit einer Paste 5 bis zu einer festgelegten Höhe h, ausgehend von der Grenzfläche 4 getränkt. Mit Hilfe der Paste 5 ist der Träger 2 mit der Deckschicht 3 verklebt. Abhängig von der gewählten Ausführungsform kann auch eine zweite Paste 27 verwendet werden. Die zweite Paste 27 weist Armierungspartikel 30, wie z. B. Füllstoffe und/oder Fasern auf.

Fig. 2 zeigt eine zweite Schicht 6 mit einem Träger 2 aus einem Gewebe und einer Deckschicht 3, die an einer Grenzfläche 4 aneinander anliegen. In der zweiten Schicht 6 ist der Träger 2 vollständig mit der Paste 5 gefüllt, wobei auch in dieser Ausführungsform die Paste 5 an die Grenzfläche 4, d.h. an die Deckschicht 3 angrenzt und eine haftende Verbindung zwischen dem Träger 2 und der Deckschicht 3 herstellt. Abhängig von der gewählten Ausführungsform kann auch eine zweite Paste 27 verwendet werden. Die zweite Paste 27 weist Armierungspartikel 30, wie z. B. Füllstoffe und/oder Fasern auf.

Als Gewebe kann jede Art von Struktur verwendet werden, die mit der Paste wenigstens teilweise benetzbar ist und sich zum Verkleben mit der Deckschicht eignet. Zudem sollte sich das Gewebe vorzugsweise als Oberfläche für eine weitere Bearbeitung wie z.B. zum Versehen mit Putz, insbesondere Wandputz oder Bekleben mit Fliesen eignen. Als Gewebe kann ein Gelege, ein technisches Gewirk, ein Strickgut, ein Vlies, das Glasfasern oder Polyesterfasern und/oder deren Kombination aufweist, oder ein verstärktes Papier verwendet werden. Eine Aufgabe des Trägers ist es, mit der Paste eine Armierung für die dampfdichte Folie bereitzustellen.

Fig. 3 zeigt eine erste Vorrichtung 7 zur Herstellung einer ersten Schicht 1. Dabei wird eine Deckschicht 3 an einen Träger 2, der ein Gewebe aufweist, angedrückt, wobei zwischen die Deckschicht 3 und den Träger 2 eine klebende Paste 5 mit Hilfe einer Dosiervorrichtung 8 eingebracht wird. Die Dosiervorrichtung 8 weist einen Vorratsbehälter 9 und eine Spritzdüse 10 auf. Im Vorratsbehälter 9 befindet sich die Paste 5, die über die Spritzdüse 10 in den Zwischenbereich zwischen den Träger 2 und die Deckschicht 3 flächig eingebracht wird. Anschließend werden der Träger 2 und die Deckschicht 3 mit Hilfe von einer ersten und einer zweiten Walze 11, 12 aneinander gedrückt, wobei die Paste 5 bis zu einer festlegbaren Höhe h in den Träger 2 eingedrückt wird. Auf diese Weise wird der Träger 2 mit der Paste 5 getränkt und zugleich an der Fläche, die auf der Deckschicht 3 aufliegt, mit der Paste 5 benetzt. Die Paste 5 verklebt den Träger 2 mit der Deckschicht 3. Abhängig von der verwendeten Paste ist ein entsprechender Trocknungsvorgang für die Verklebung erforderlich. Weiterhin kann durch den Abstand der ersten und der zweiten Walze 11, 12 oder durch die Dosiervorrichtung 8 die Füllhöhe h bestimmt werden, bis zu der der Träger 2 mit der Paste 5 gefüllt wird. Die erste und die zweite Walze 11, 12 können sich in der Bewegungsrichtung des Trägers 2 und der Deckschicht 3 oder entgegen der Bewegungsrichtung des Trägers 3 und der Deckschicht 2 bewegen. Abhängig von der verwendeten Paste kann ein Trocknungsvorgang erforderlich sein, der mit einer Trocknungsvorrichtung 22 unterstützt wird und ein Aushärten der Paste unterstützt. Die Trocknungsvorrichtung 22 kann ein Heißluftgebläse, eine Wärmestrahlvorrichtung, eine Mikrowelleneinrichtung, eine UV- oder IR-Strahlungseinrichtung aufweisen. Anstelle der Spritzdüse 10 kann auch eine andere Vorrichtung vorgesehen sein, mit der die Paste auf oder in den Träger 2 eingebracht wird. Abhängig von der gewählten Ausführungsform kann auch eine zweite Paste 27 verwendet werden, die Armierungspartikel 30, wie z. B. Füllstoffe und/oder Fasern aufweist.

Ein Zusammendrücken des Trägers 2 kann auch mittels einer Walze, eines Tuchrakels oder eines Tisches auf der Unterseite des Trägers und mittels eines Rakels, eines Rollrakels oder einer ähnlichen Vorrichtung auf der Oberseite des Trägers erfolgen. Auch kann ein vertikaler Auftrag der Paste vorgesehen sein.

Fig. 4 zeigt eine zweite Vorrichtung 13, mit der ein Träger 2, der ein Gewebe aufweist, mit einer Deckschicht 3 verklebt wird. Dabei wird der Träger 2 auf eine Deckschicht 3 aufgelegt und auf einem Fördertisch 14 weiterbewegt. Der Fördertisch kann z. B. auch als Walze oder Tuchrakel oder Stahlband ausgebildet sein. Der Träger 2 und die Deckschicht 3 werden dabei unter einer zweiten Dosiervorrichtung 15 vorbeibewegt. Die zweite Dosiervorrichtung 15 weist einen zweiten Vorratsbehälter 17 für die Paste 5 und eine zweite Spritzdüse 16 auf. Anstelle der Spritzdüse 16 kann auch eine benetzbare Rakelwalze oder zwei Walzen mit einem in der Größe veränderbaren Zuführschlitz zur Dosierung der Paste vorgesehen sein. Weiterhin kann eine tangentiale Auftragung der Paste erfolgen. Für das Auftragen der Paste können auch andere geeignete Verfahren, z. B. ein Rollrakel-Auftrag Verwendung finden.

Mit Hilfe der zweiten Dosiervorrichtung 15, wird auf eine Oberseite 18 des sich vorbeibewegenden Trägers 2 eine festgelegte Lage 19 der Paste 5 aufgebracht. Der Träger und die Deckschicht 3 werden weiter in Richtung auf ein Rakel 20 bewegt. Das Rakel 20 weist ein Abstreifelement 21 auf, das auf der Höhe der Oberfläche 18 des Trägers 2 angeordnet ist. In einer Ausbildungsform ist der Abstreifer 21 geneigt angeordnet. Durch die Bewegung des Trägers 2 und der Anordnung des Abstreifers 21 wird die Lage 19 der Paste 5 in den Träger 2 gedrückt und der Träger 2 in der gesamten Höhe mit der Paste 5 getränkt. Überschüssige Paste wird durch Abstreifen entfernt und somit die Paste dosiert. Dabei wird die Paste 5 bis zu der Grenzfläche 4 zwischen dem Träger 2 und der Deckschicht 3 eingebracht. Das Rakel 20 kann unter anderem auch als Rollrakel ausgebildet sein.

Durch die Paste 5 wird der Träger 2 mit der Deckschicht 3 verklebt. Die Paste 5 ist in Fig. 4 im Träger 2 in Form von Punkten dargestellt. Abhängig von der gewählten Ausführungsform kann auch eine zweite Paste 27 verwendet werden, die Armierungspartikel 30, wie z. B. Füllstoffe und/oder Fasern aufweist. Abhängig von der verwendeten Paste kann ein Trocknungsvorgang und/oder Aushärtungsvorgang erforderlich sein, der mit einer Trocknungsvorrichtung 22 unterstützt wird. Die Trocknungsvorrichtung 22 kann ein Heißluftgebläse, eine Wärmestrahlvorrichtung oder eine Strahlvorrichtung (UV, IR, Mikrowelle) aufweisen.

Abhängig von der gewählten Ausführungsform kann die Höhe der Lage 19 auch mit Hilfe eines Rollrakels nach dem Aufbringen durch die zweite Dosiervorrichtung 15 eingestellt werden.

Weiterhin kann eine Unterkante 23 des Abstreifers 21, in der Weise auf die Oberfläche 18 des Trägeres 2 aufgedrückt werden, dass ein gleichmäßiges Anpressen des Trägers 2 auf der Deckschicht 3 erreicht wird.

Die Paste kann intumeszierende und/oder brandhemmende und/oder anorganische Komponenten aufweisen. Zudem kann die Paste mineralische und/oder wasserbasierte Komponenten aufweisen. Eine mineralische Paste kann bevorzugt Wasser, Füllstoffe, Dispergierhilfsmittel, Netzhilfsmittel, rheologische Additive und/oder Bindemittel aufweisen.

Die erfindungsgemäße Schicht vereint die Vorteile einer gas- und/oder dampfdichten Schicht mit denen einer mineralischen Schicht. Die erfindungsgemäße Schicht ist dampf- und/oder gasdicht, preiswert herzustellen und weist eine hohe Formstabilität auf. Zudem weist die Schicht eine hohe Oberflächenfestigkeit gegen Flächen- und Punktkräfte auf. Zudem kann auf die freie Seite des Trägers der Schicht direkt Putz aufgebracht oder Fliesen aufgeklebt werden. Zudem kann auf die freie Seite des Trägers eine Kalt- oder Warmverklebung mit weiteren Materialien durchgeführt werden. Zudem wird mit der erfindungsgemäßen Schicht als Deckschicht für Isolationsplatten (z. B. Polyurethanhartschaumplatten) PU-Material wegen der Gasdichtigkeit eingespart. Weiterhin kann das Brandverhalten der Schicht durch die Wahl der Zusammensetzung der mineralischen Paste eingestellt werden. Zudem zeigt die erfindungsgemäße Schicht eine gute Haftung zu kalt oder warm verklebten Dichtungsbahnen.

Als Paste kann beispielsweise ein anorganischer Binder, insbesondere ein anorganischer Phosphat-Binder eingesetzt werden. Der anorganische Binder kann Kalziumsilikat-Stellen aufweisen, die miteinander durch Aluminiumoxid-Siliziumoxid-Phosphatbindungen verbunden sind, wobei die Kalziumsilikat-stellen als Vernetzungsstellen für die Aluminiumoxid-Siliziumoxid-Phosphatbindungen wirken und ein Gewichtsverhältnis von Aluminiumoxid zu Siliziumoxid im Bereich von 0,3:1 und 10:1 liegt. Ein entsprechender anorganischer Binder ist beispielsweise in der Patentanschrift DE 601 10 131 T2 beschrieben.

Weiterhin kann als Paste ein Siliko-Aluminat verwendet werden, das eine Polymerzementmatrix aufweist. Eine entsprechende Paste ist in der Patentschrift DE 698 04 803 T2 beschrieben.

Die Erfindung betrifft insbesondere ein Verfahren und eine Vorrichtung zur Herstellung einer Schicht in Form einer flexiblen Brandschutzbahn. Die Erfindung betrifft eine flexible, rollbare Bahn, deren Einsatz vielfältig sein kann. Die rollbare Bahn kann als Decklage für Wärmedeckstoffe ebenso eingesetzt werden, wie in Brandschutzwänden, die beispielsweise aus Gipskarton aufgebaut sind, um die jeweils hintergelegenen Materialien im Brandfalle vor direkter Flammeneinwirkung und rascher Hitzeentwicklung zu schützen. Weiterhin kann die Bahn als Trennlage auf Dächern zwischen Abdichtung und Dachstuhl eingebracht werden, um im Brandfall außerhalb des Gebäudes durch Funkenflug das Entfachen eines Brandes an dem gesamten Gebäude zu verzögern bzw. zu verhindern. In dieser Eigenschaft kann die Bahn auch im gewerblichen, sowie auch im privaten Bereich als Unterlage für Innendekore im Innenausbau verwandt werden, wobei die Bahn auch hier wieder im Falle eines Brandes den Untergrund vor Hitze und direkter Flammeneinwirkung schützt und damit die Ausbreitung eines Brandes verhindert oder zumindest erheblich verzögert. Die Möglichkeiten des Einsatzes sind hiermit noch nicht ausgeschöpft, wobei die Bahn etwa als Brandbarriere von Heizungs- oder Serverräumen einsetzbar ist, um nur eine weinige Anwendungen beispielhaft anzuführen.

Die erfindungsgemäße Schicht in Form einer Brandschutzbahn kann als flächiges Gebilde in Rollenform von ca. 0,5 bis 5 mm Stärke und je nach Anwendung und Anforderung von etwa 50 g/m² bis 2.000 g/m² Flächengewicht eingesetzt werden. Die Brandschutzbahn ist sehr gut dazu geeignet, mit sehr geringem Aufwand und ohne spezielle fachliche Voraussetzungen auch großflächig installiert zu werden.

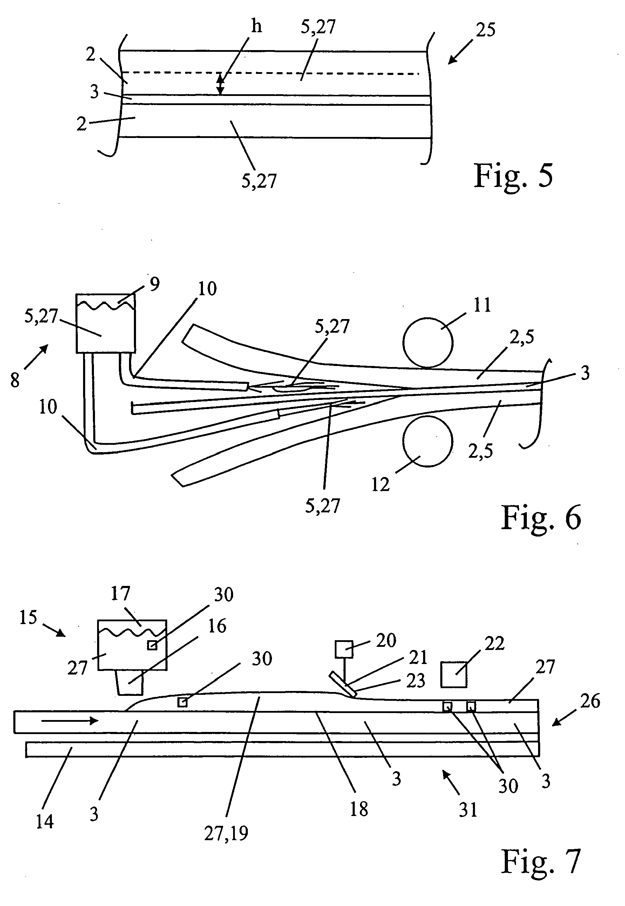

Figur 5 zeigt eine dritte Schicht 25, bei der die Deckschicht von beiden Seiten mit einem Träger 2 in Form eines Gewebes und der Paste 5 bedeckt ist. Der Aufbau der dritten Schicht 25 ist analog zu der ersten und/oder zweiten Schicht 1,6, wie in den Figuren 1 und 2 beschrieben. Abhängig von der gewählten Ausführungsform ist der Träger 2 vollständig oder nur bis zu einer festgelegten Höhe h mit der Paste 5 gefüllt. In der dargestellten Ausführungsform ist der obere Träger nur bis zu einer festgelegten Höhe h mit der Paste 5 gefüllt. Der untere Träger 2 ist vollständig mit der Paste 5 gefüllt. Zudem können unterschiedliche Materialien für den oberen und unteren Träger 2 verwendet werden. Weiterhin können der obere und untere Träger 2 unterschiedliche Dicken aufweisen. Zudem können verschiedene Pasten für den oberen und den unteren Träger verwendet werden. Abhängig von der gewählten Ausführungsform kann auch eine zweite Paste 27 verwendet werden, die Armierungspartikel 30, wie z. B. Füllstoffe und/oder Fasern aufweist.

Die dritte Schicht 25 kann mit den Vorrichtungen der Figuren 3 und/oder 4 oder mit einer Kombination der Vorrichtungen der Figuren 3 und 4 hergestellt werden, wobei dabei sowohl auf einer Oberseite der Deckschicht 3 als auch auf der Unterseite der Deckschicht 3 eine Vorrichtung zum Aufbringen der Paste 5 und/oder der zweiten Paste 27 und zum Führen des Trägers 2 vorgesehen ist. Dabei kann für die Oberseite eine Vorrichtung der Fig. 3 und für die Unterseite eine Vorrichtung der Figur 4 oder umgekehrt vorgesehen sein.

Figur 6 zeigt eine schematische Darstellung einer Vorrichtung, die analog zu Figur 3 aufgebaut ist, aber zwei Spritzdüsen 10 oder entsprechende Auftragvorrichtungen aufweist. Eine Spritzdüse 10 ist oberhalb und eine Spritzdüse 10 ist unterhalb der Deckschicht 3 angeordnet. Die zwei Spritzdüsen 10 bringen sowohl zwischen die Deckschicht 3 und den oberen Träger 2 als auch zwischen die Deckschicht 3 und den unteren Träger 2 Paste 5 ein. Anschließend werden die zwei Träger von beiden Seiten mit den Walzen 11,12 an die Deckschicht 3 gedrückt und dabei die Paste 5 in den Träger 2 eingedrückt und bis zu den Grenzflächen Träger 2 und Deckschicht 3 gebracht. Anschließend wird die Paste 5 ausgehärtet. Damit erfolgt eine beidseitige Befestigung, insbesondere Verklebung zwischen dem oberen Träger 2 und der Deckschicht 3 und dem unteren Träger 2 und der Deckschicht 3. Der obere und der untere Träger weisen jeweils ein Gewebe auf. Abhängig von der gewählten Ausführungsform kann auch eine zweite Paste 27 verwendet werden, die Armierungspartikel 30, wie z. B. Füllstoffe und/oder Fasern aufweist.

In einer weiteren Ausführungsform wird der Träger in Form einer zweiten Paste 27 auf die Folie aufgebracht, die Armierungspartikel 30, wie z. B. Füllstoffe und/oder Fasern aufweist. Die zweite Paste 27 wird mit einem Aushärtungsprozess verfestigt. Die ausgehärtete zweite Paste 27 mit den Armierungspartikeln 30 stellt den Träger für die Deckschicht dar.

Die zweite Paste 27 kann mineralische oder organische Füllstoffe aufweisen. Als mineralische Füllstoffe können CaCO3, Kaolin, ATH, Talkum usw. verwendet werden. Als organische Füllstoffe können Hohlkugeln, expandierende Stoffe usw. verwendet werden. Weiterhin können als Armierungspartikel 30 mineralische, organische oder aus Kunststoff bestehende Fasern verwendet werden. Zudem weist die zweite Paste 27 ein Bindemittel und/oder einen Klebstoff auf. Als Klebstoff können thermoplastische bevorzugt wasserbasierte Polymere verwendet werden. Zudem können als Klebstoff duroplastische oder anorganische Klebstoffe verwendet werden. Weiterhin kann die zweite Paste Hilfsmittel wie z.B. Entschäumer usw. aufweisen.

Figur 7 zeigt eine dritte Vorrichtung 31, mit der die zweite Paste 27 mit Armierungspartikeln 30 auf eine Deckschicht 3 aufgebracht wird und eine vierte Schicht 26 mit einem Träger erhalten wird. Dabei wird eine Deckschicht 3 auf einen Fördertisch 14 gelegt und mithilfe des Fördertisches 14 unter der zweiten Vorrichtung 31 vorbeibewegt. Der Fördertisch kann auch als Walze oder Tuchrakel oder Stahlband ausgebildet sein. Es ist eine zweite Dosiervorrichtung 15 vorgesehen, die einen zweiten Vorratsbehälter 17 für die zweite Paste 27 und eine zweite Spritzdüse 16 aufweist. Anstelle der zweiten Spritzdüse 16 kann auch eine benetzbare Rakelwalze, zwei Walzen mit einem in der Größe veränderbaren Zuführschlitz zur Dosierung der zweiten Paste vorgesehen sein. Weiterhin kann eine tangentiale Auftragung der Paste erfolgen.

Mit Hilfe der zweiten Dosiervorrichtung 15, wird auf eine Oberseite 18 der sich vorbeibewegenden Deckschicht 3 eine festgelegte Lage 19 der zweiten Paste 27 aufgebracht. Die Deckschicht 3 wird weiter in Richtung auf ein Rakel 20 bewegt. Das Rakel 20 weist ein Abstreifelement 21 auf, das auf einer festgelegten Höhe über der Deckschicht 3 angeordnet ist. Vorzugsweise ist der Abstreifer 21 geneigt angeordnet. Durch die Bewegung der Deckschicht 3 und der Anordnung des Abstreifers 21 wird die Höhe der Lage 19 der zweiten Paste 27 eingestellt. Überschüssige zweite Paste 27 wird durch Abstreifen entfernt und somit die Dicke des nach dem Aushärten der zweiten Paste erhaltenen Trägers 2,27 festgelegt. Das Rakel 20 kann auch als Rollrakel ausgebildet sein.

Die zweite Paste 27 enthält Armierungspartikel 30 wie z.B. Füllstoffe oder Fasern. Zudem enthält die zweite Paste ein Klebemittel, mit dem die zweite Paste an die Deckschicht 3 geklebt wird. Nach dem Aushärten bildet die ausgehärtete zweite Paste 27 einen Träger, der mit der Deckschicht 3 verbunden ist.

Abhängig von der verwendeten zweiten Paste kann ein Trocknungsvorgang erforderlich sein, der mit einer Trocknungsvorrichtung 22 unterstützt wird. Die Trocknungsvorrichtung 22 kann ein Heißluftgebläse oder eine Wärmestrahlvorrichtung oder einer UV-Strahlungsvorrichtung aufweisen.

Abhängig von der gewählten Ausführungsform kann die Höhe der Lage 19 auch mit Hilfe eines Rollrakels nach dem Aufbringen durch die zweite Dosiervorrichtung 15 eingestellt werden.

Die beschriebenen Schichten können ein- oder beidseitig mit einem Träger versehen sein und weisen den Vorteil auf, dass eine Handhabung besonders unter höheren Temperaturen, beispielsweise bei Beflammung zur Verklebung von z. B. Bitumenbahnen verbessert ist. Zur Steigerung der Festigkeit gegen Flächen- und Punktkräfte, zur Verbesserung der Temperaturbeständigkeit bzw. des Brandverhaltens bis hin zur Nichtbrennbarkeit, weisen die Schichten einen Träger auf, der wahlweise zur Steigerung der Festigkeit mit einer Armierung versehen ist.

Die beschriebenen Schichten sind normal oder schwer entflammbar und weisen eine erhöhte Festigkeit und zudem eine Gas- und/oder Dampfdichtigkeit auf.

Als Bindemittel können organische oder anorganische Bindemittel verwendet werden, wobei die Bindemittel einen Anteil zwischen 5 bis 100 % Gewichtsprozent der Paste 5 oder der zweiten Paste 27 aufweisen können. Gute Ergebnisse wurden mit einem Bindemittel von 15 Gewichtsprozent am Anteil der Paste bzw. der zweiten Paste erreicht.

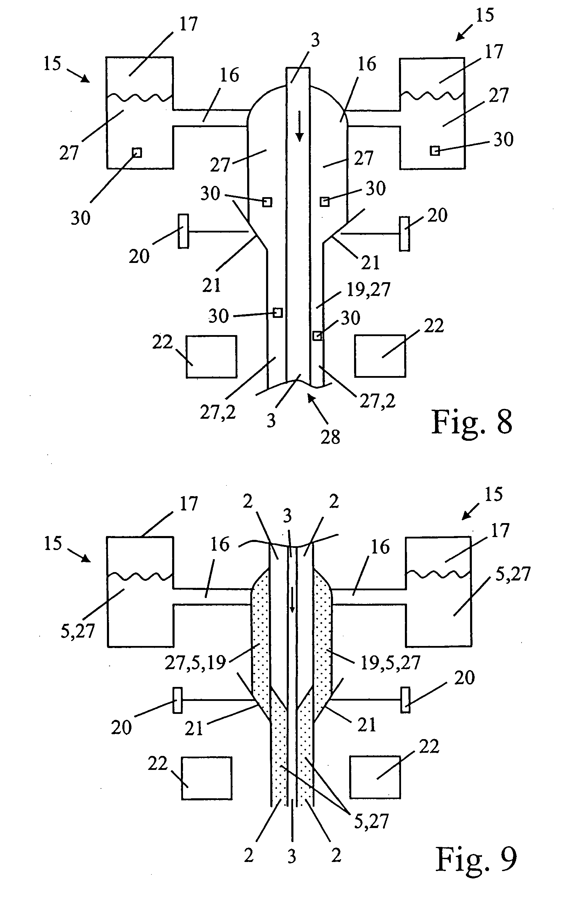

Figur 8 zeigt eine weitere Ausführungsform, bei der eine Deckschicht 3 von zwei Seiten mit einer zweiten Paste 27 bedeckt wird. Die zwei Abstreifelemente 21 der zwei Rakel 20 sorgen für ein festgelegte Höhe der Lagen 19 auf beiden Seiten der Deckschicht 3. Bei dieser Vorrichtung wird die Deckschicht 3 vertikal bewegt. Die Deckschicht kann entweder nach oben oder nach unten bewegt werden. Optional sind zwei Trocknungsvorrichtungen 22 vorgesehen. Nach dem Aushärten der zweiten Paste 27 wird eine fünfte Schicht 28 mit einer Deckschicht 3 und beidseitigem Träger erhalten, wobei die Trägerschichten aus der verfestigten zweiten Paste 27 mit Armierungspartikeln gebildet werden.

Figur 9 zeigt eine Vorrichtung analog zu Fig. 4, wobei auf beide Seiten der Deckschicht ein Träger 2 aufgebracht wird und auf beide Träger 2 eine Paste 5 aufgebraucht und in die Träger 2 bis zur Grenzfläche 4 zwischen den Trägern 2 und die Deckschicht 3, die zwischen den Trägern angeordnet ist, eingebracht wird. Abhängig von der gewählten Ausführungsform können verschiedene Träger 2 für jede Seite der Deckschicht 3 und/oder verschiedene Pasten 5 für jede Seite verwendet werden. Die Deckschicht 3 kann dabei entweder nach unten, wie dargestellt, oder nach oben bewegt werden.

## Patentansprüche

1. Verfahren zum Herstellen einer Schicht mit einer Deckschicht und einem Träger, wobei der Träger ein Gewebe aufweist, wobei das Gewebe zuerst mit einer Seitenfläche auf die Deckschicht gelegt wird und dann über eine freie Seitenfläche des Gewebes mit der klebenden Paste getränkt wird, wobei die klebende Paste bis zu einer Grenzfläche zwischen der Deckschicht und dem Gewebe eingebracht wird und das Gewebe mit der Deckschicht verklebt wird.

2. Verfahren nach Anspruch 1, wobei die Deckschicht als Metallfolie, insbesondere als Aluminiumfolie ausgebildet ist.

3. Verfahren nach einem der Ansprüche 1 oder 2, wobei als Paste eine mineralische Paste, insbesondere eine auf Wasser basierende mineralische Paste verwendet wird.

4. Verfahren nach einem der Ansprüche 1 bis 3, wobei das Gewebe in einem Arbeitsvorgang mit der Paste benetzt und mit der Deckschicht verklebt wird.

5. Verfahren nach einem der Ansprüche 1 bis 4, wobei die Deckschicht dampfdicht und/oder gasdicht ausgebildet ist.

6. Verfahren nach einem der Ansprüche 1 und 3 bis 5, wobei die Deckschicht als Kunststofffolie ausgebildet wird.

7. Verfahren nach einem der Ansprüche 1 bis 6, wobei ein Gewebe mit einem Flächengewicht zwischen 15 und 500g/m² verwendet wird.

8. Verfahren nach einem der Ansprüche 1 bis 7, wobei die Paste Armierungspartikel, insbesondere Fasern als Armierungspartikel aufweist.

9. Schicht (1, 6) mit einer Deckschicht (3) und einem Träger (2), wobei der Träger ein Gewebe (2) aufweist, wobei das Gewebe wenigstens teilweise bis an eine Grenzfläche (4) mit einer Paste (5;27) getränkt ist und die getränkte Fläche des Gewebes (2) an der Deckschicht (3) anliegt und das Gewebe (2) mithilfe der Paste (5;27) mit der Deckschicht (3) verklebt ist.

10. Schicht (1, 6) nach Anspruch 9, wobei die Deckschicht (3) als Metallfolie oder als Kunststofffolie ausgebildet ist.

11. Schicht nach einem der Ansprüche 9 oder 10, wobei als Paste (5;27) eine mineralische Paste insbesondere als eine auf Wasser basierende mineralische Paste ausgebildet ist.

12. Schicht nach einem der Ansprüche 9 bis 11, wobei die Deckschicht (3) dampfdicht und/oder gasdicht ausgebildet ist.

13. Schicht nach einem der Ansprüche 9 bis 12, wobei das Gewebe ein Flächengewicht zwischen 15 und 500g/m² aufweist.

14. Schicht nach einem der Ansprüche 9 bis 12, wobei das Gewebe als Vlies ausgebildet ist und ein Flächengewicht zwischen 15 g/m² und 200 g/m² aufweist.

15. Schicht nach einem der Ansprüche 9 bis 14, wobei die Paste (27) Armierungspartikel (30), insbesondere Fasern und/oder Füllstoffe als Armierungspartikel (30) aufweist.
